# EUROPÄISCHE PATENTSCHRIFT

(11) **EP 1 127 005 B1**
(45) Veröffentlichungstag und Bekanntmachung des Hinweises auf die Patenterteilung: **23.07.2003**
(21) Anmeldenummer: 99957959.2
(22) Anmeldetag: 02.11.1999
(51) Int. Cl.: B65B 55/02

(54) **VERFAHREN UND VORRICHTUNG ZUM HANDHABEN UND THERMISCHEN BEHANDELN VON BEUTEL- ODER FOLIENVERPACKUNGEN**
METHOD AND DEVICE FOR HANDLING AND THERMALLY TREATING BAG OR FILM PACKAGINGS
PROCEDE ET DISPOSITIF POUR LA MANUTENTION ET LE TRAITEMENT THERMIQUE D'EMBALLAGES SOUS FORME DE SACHETS OU DE FILMS

(30) Priorität: 02.11.1998 DE 19850419
(43) Veröffentlichungstag der Anmeldung: 29.08.2001
(73) Patentinhaber: Mars, Inc., McLean, VA 22101-3883 (US)
(72) Erfinder: PROTZ, Meinhard, D-29699 Bomlitz (DE); KALISCH, Peter, D-28219 Bremen (DE)
(74) Vertreter: Goddar, Heinz J., Dr.
(86) Internationale Anmeldenummer: DE9903548
(87) Internationale Veröffentlichungsnummer: WO00026090

(56) Entgegenhaltungen:
- EP-A- 0 350 564
- EP-A- 0 812 547
- AU-A- 4 630 479
- DE-A- 2 553 359
- FR-A- 2 129 843
- US-A- 2 532 604
- US-A- 3 625 712

## Beschreibung

Die Erfindung betrifft ein Verfahren zum Handhaben und thermischen Behandeln von rechteckigen Beutel- oder Folienverpackungen mit geringerer Dicke als Länge und Breite und mit zwei längeren und zwei kürzeren Seitenkanten, sowie eine magazinartige Trägervorrichtung zum Handhaben und thermischen Behandeln einer Vielzahl von Beutel- oder Folienverpakkungen zur Durchführung des genannten Verfahrens.

Der Begriff "Handhaben" umfaßt im Sinne der vorliegenden Erfindung jegliches Fördern, Zuführen, Überführen, Sortieren, Zwischenlagern, Ergreifen usw.

Die Erfindung liegt auf dem Gebiet der Herstellung von insbesondere mit (Tier-)Nahrungsmitteln gefüllten Beutel- oder Folienverpackungen, wobei vorab hergestellte (Schlauch-)Beutel- oder Folienverpackungen, die auch als "Pouches" bezeichnet werden, in speziellen Füll- und Versiegelungseinrichtungen mit einem Inhaltsstoff gefüllt und verschlossen (versiegelt) werden und anschließend u.a. einer Sterilisierung unterworfen werden; bevor die fertigen Erzeugnisse verpackt werden.

Zur Erläuterung der Zielsetzung der Erfindung sei beispielsweise auf die Herstellung von in Folienverpackungen verpackten Tiemahrungserzeugnissen verwiesen, bei denen aufgrund veterinärrechtlicher Vorschriften ein bestimmter sog. F₀-Wert einzuhalten ist, der für bestimmte Produkte im Bereich zwischen 20 und 40 liegt. Hierfür ist erforderlich, daß an jeder Stelle des fertigen Produkts eine Temperatur von mindestens 121°C während einer bestimmten Zeitdauer eingehalten wird. Dies wird beispielsweise durch Einbringen der Beutelverpakkungen in einen Dampfsterilisator mit einem Druck zwischen 1,5 und 2 bar erreicht.

Obwohl die relativ flachen Beutelverpackungen im Vergleich zu kompakten Formen wie Dosenverpackungen im Hinblick auf die Wärmeeindringung und die dafür erforderliche Zeit bereits sehr günstig sind (die Wärmeeindringungsgeschwindigkeit nimmt bekanntlich im wesentlichen quadratisch mit der größten Tiefenabmessung eines aufzuheizenden Körpers zu), ist die bisherige Vorgehensweise, bei der die Beutelverpackungen bzw. Pouches auf tablettartigen Blechen nebeneinander angeordnet werden, wobei mehrere Bleche übereinander gestapelt werden, sowohl hinsichtlich des Wärmeübergangs im Sterilisator als auch unter Handhabungsgesichtspunkten noch als nachteilig anzusehen.

Dies liegt einerseits daran, daß der Kontakt des Sterilisierungsdampfes mit den auf tablettförmigen Blechen liegenden Folienverpackungen nicht optimal ist (Lochbleche können nur bedingt eingesetzt werden, da sich das Lochmuster auf die bei der Sterilisierungstemperatur relativ weichen Folienverpackungsmaterialien übertragen würde), und andererseits daran, daß das größtenteils manuelle Auflegen der Folienverpackungen aus Tabletts eine Unterbrechung des ansonsten im wesentlichen automatisiert ablaufenden Herstellungsvorgangs bedeutet.

Aus der EP 0 812 547 A1 ist ein Verfahren und eine Vorrichtung zum Sterilisieren von folienbeutelähnlichen Behältnissen bekannt, wobei die Beutel während der thermischen Behandlung in umgekehrter Orientierung (Oberseite weist nach unten) in stehender Ausrichtung gehandhabt werden, wobei sie auf ihrer oberen, kürzeren Seitenkante lagern.

Die Aufgabe der vorliegenden Erfindung besteht daher darin, ein verbessertes Verfahren bzw. eine Vorrichtung zum Handhaben und thermischen Behandeln von Folienverpackungen bereitzustellen, mit dem bzw. der sowohl das Problem der teilweise manuellen Handhabung von Folienverpackungen gelöst als auch die thermische Behandlung verbessert wird, wodurch die Kosten für Sterilisierung und Handhabung flexibler Folien- bzw. Beutelverpackungen gesenkt werden.

In verfahrensmäßiger Hinsicht wird diese Aufgabe durch ein Verfahren zum Handhaben und thermischen Behandeln von rechteckigen Beutel- oder Folienverpackungen mit geringerer Dicke als Länge und Breite, mit zwei längeren und zwei kürzeren Seitenkanten, gelöst, welches sich durch eine Orientierung der Folienverpackungen auszeichnet, bei der eine die Seitenkanten enthaltende Haupterstreckungsebene der Folienverpackung bei der Handhabung und/oder thermischen Behandlung einen Winkel von weniger als 60° mit der Vertikalen bildet und die längeren Kanten im wesentlichen horizontal ausgerichtet sind.

Bevorzugt ist vorgesehen, daß der Winkel weniger als 30° beträgt. Weiter bevorzugt ist vorgesehen, daß der Winkel 0° beträgt, d.h. daß sich die Folienverpackungen in senkrechter Orientierung, auf einer längeren Seitenkante lagernd, befinden.

Bei einer schrägen Orientierung kann vorgesehen sein, daß die Folienverpackungen einander schuppenartig überlappend angeordnet sind.

In vorrichtungsmäßiger Hinsicht wird die Aufgabe der Erfindung durch eine magazinartige Trägervorrichtung zur Handhabung und thermischen Behandlung einer Vielzahl von Folien-verpackungen gelöst, die sich zur Durchführung des erfindungsgemäßen Verfahrens eignet, mit einer Anzahl von hintereinander angeordneten, im wesentlichen zueinander parallelen Trennwänden zur Bildung von Aufnahmetaschen für jeweils eine Folienverpackung, wobei zwischen zwei benachbarten Aufnahmetaschen jeweils zwei Trennwände mit gegenseitigem Abstand angeordnet sind.

Zweckmäßigerweise entspricht die Breite der Trennwände im wesentlichen der längsten Abmessung von aufzunehmenden Folienverpackungen.

Es kann vorgesehen sein, daß die Höhe der Trennwände geringer ist als die Länge der kürzeren Seitenkante von aufzunehmenden Folienverpackungen:

Bevorzugt ist vorgesehen, daß der gegenseitige Abstand von eine Aufnahmetasche bildenden Trennwänden im wesentlichen der Dicke von aufzunehmenden Folienverpackungen entspricht.

In einer bevorzugten Ausführungsform sind die eine Aufnahmetasche bildenden Trennwände leicht V-förmig mit einem Öffnungswinkel von mehr als 0° angeordnet.

Bevorzugt ist vorgesehen, daß die Trennwände flexibel an einem länglichen Grundkörper gehalten sind, so daß eine Aufweitung der Aufnahmetasche unter Vergrößerung des. Öffnungswinkels möglich ist.

Vorzugsweise weisen die Aufnahmetaschen einen V-förmigen Boden auf.

Zweckmäßigerweise ist die Trägervorrichtung stapelbar ausgebildet.

Vorzugsweise ist vorgesehen, daß die Trägervorrichtung derart stapelbar ist, daß Aufnahmetaschen einer Trägervorrichtung teilweise in Zwischenräumen zwischen Aufnahmetaschen einer benachbart anzuordnenden Trägervorrichtung angeordnet sind.

Weitere Vorteile und Merkmale der Erfindung ergeben sich aus der nachfolgenden Beschreibung einer bevorzugten Ausführungsform der Erfindung, wobei auf eine Zeichnung Bezug genommen wird, deren (einzige)

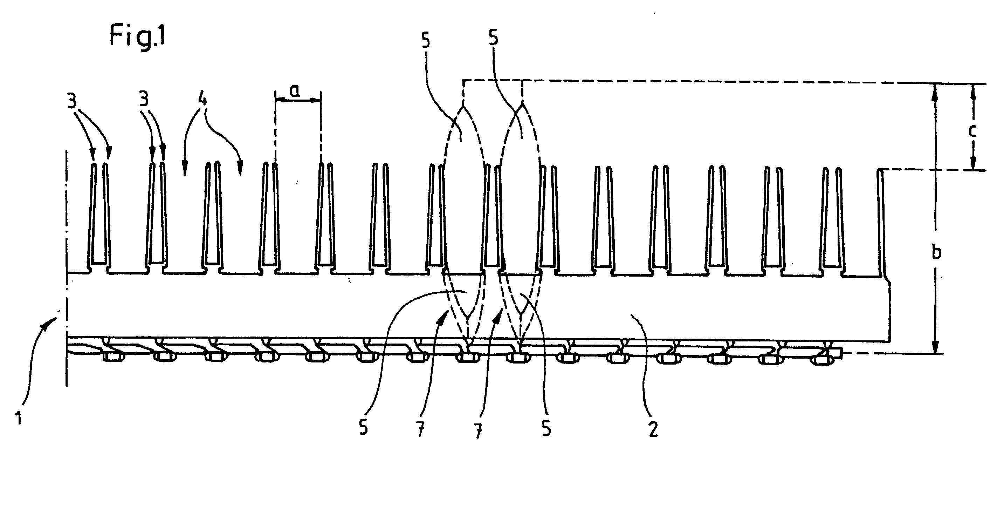

Fig. 1 einen Ausschnitt aus einer erfindungsgemäßen Trägervorrichtung zum Handhaben von Folienverpackungen zeigt.

Fig. 1 zeigt in einer Seitenansicht den Aufbau einer im ganzen mit 1 bezeichneten, erfindungsgemäßen Trägervorrichtung zum Handhaben einer Vielzahl von Folienverpackungen. Auf einem länglichen Grundkörper 2, der aus einem geeigneten Profilquerschnitt bestehen kann, sind eine Anzahl von rechteckigen Trennwänden 3 parallel zueinander so angebracht, daß jeweils dazwischen Aufnahmetaschen 4 gebildet werden, wobei der gegenseitige Abstand a von jeweils zwei eine Aufnahmetasche bildenden Trennwänden so gewählt ist, daß jeweils die Aufnahme einer Folienverpackung 5 möglich ist, Jeweils zwei eine Aufnahmetasche 4 bildende Trennwände 3 sind nach oben, d.h. in einer vom Grundkörper 2 wegweisenden Richtung, leicht V-förmig angebracht, um das Einlegen bzw. Einführen einer Folienverpakkung 5 von oben in die Aufnahmetasche zu erleichtern. Weiterhin sind die Trennwände 3, beispielsweise durch punktuelle Befestigung ihres unteren Randes am Grundkörper 2, leicht flexibel an diesem gehalten, so daß eine Aufweitung des Öffnungswinkels der Trennwände möglich ist, wenn eine entsprechende Kraft auf diese einwirkt. Dies kann bei einem Erhitzungs- oder Sterilisiervorgang vorteilhaft sein, da sich der Inhalt der Folienverpackung bei Erwärmung auf ca. 120°C um bis zu 4% ausdehnt.

Wie in Fig. 1 weiter angedeutet ist, sind die Aufnahmetaschen 4 im Bereich des Grundkörpers 2, d.h. unterhalb der Trennwände 3, mit einem V-förmigen Boden 7 versehen, auf dem die Folienverpackungen 5 bei im wesentlichen waagerechter Stellung des Grundkörpers 2 bzw. der Trägervorrichtung 1 mit ihren längeren Seitenkanten aufliegen.

Aufgrund der erfindungsgemäßen Positionierung der Folienverpackungen entspricht die senkrecht zur Darstellungsebene der Fig. 1 verlaufende Breitenabmessung der Trägervorrichtung im wesentlichen der längsten Abmessung der aufzunehmenden Folienverpackungen entspricht, während die Höhe b der Trägervorrichtung, die sich aus der Höhe des Grundkörpers 2 zuzüglich der Höhe der Trennwände 3 ergibt, geringer ist als die Länge der kürzeren Seitenkante der Folienverpackungen 5, damit diese nach oben aus den Aufnahmetaschen 4 überstehen, wie Fig. 1 zeigt.

Das Maß c, um welches man die Folienverpackungen 5 über die Oberkante der Trennwände 3 überstehen läßt, hängt u.a. davon ab, wie standfest die Folienverpackungen insbesondere unter Wärmeeinwirkung (Erweichung des Folienmaterials) sind, und sollte so groß wie möglich sein, um Wärmeübergangsvorgänge möglichst zu begünstigen und Material bei der Träger-vorrichtung einzusparen.

Das erfindungsgemäße Verfahren kann folgendermaßen ablaufen: Zunächst werden vorab hergestellte Folienverpackungen gefüllt und verschlossen und in erfindungsgemäße Trägervorrichtungen 1 eingebracht. Eine größere Anzahl von Trägervorrichtungen wird auf Paletten zu blockförmigen Einheiten zusammengefaßt, sterilisiert, nach dem Sterilisieren wieder von den Paletten entstapelt und getrocknet. Schließlich werden die Folienverpackungen aus den Trägervorrichtungen 1 entnommen und zu versende- bzw. verkaufsfähigen Verpackungscinheiten 20 zusammengefaßt. Dabei müssen die Folienverpackungen nur einmal in die Trägervorrichtungen eingelegt und einmal wieder entnommen werden, was ohne manuelle Tätigkeit erfolgen kann und die Handhabung ersichtlich vereinfacht.

Die erfindungsgemäße Handhabung der Folienverpackungen in der Weise, daß diese auf ihrer längeren Seitenkante stehen, senkrecht oder geneigt, bringt zahlreiche Vorteile im Vergleich zu einer flachliegenden oder auf einer kürzeren Seitenkante stehenden Lagerung mit sich Zunächst einmal ist aufgrund der Verwendung der erfindungsgemäßen Trägervorrichtungen bzw. Magazine oder Kassetten aufgrund des festen, vorgegebenen Abstands zwischen zwei Folienverpackungen eine automatisierte Handhabung möglich. Diese automatisierte Handhabung wird durch die erfindungsgemäße Lagerung auf einer längeren Seitenkante noch beschleunigt, da beim Beschicken bzw. Entnehmen kürzere Wege im Vergleich zu einer stehenden Lagerung zu durchlaufen sind. Weiterhin wird die Dickenverteilung des in einer Folienverpackung enthaltenen Produkts hinsichtlich Wärmeeindringung optimiert. Hier besteht ein Problem dahingehend, daß insbesondere bei erhöhten Temperaturen (Sterilisierung) das Folienmaterial der Verpackungen erweicht und die Produkte fluidähnliche Eigenschaften annehmen, so daß sie dazu neigen, sich im jeweils untersten Bereich einer Folienverpackung unter Ausbauchung derselben verstärkt anzusammeln. Dabei verstärkt sich die Ausbauchungsneigung ersichtlich mit der Höhe der Folienverpackung (statischer Druck des Inhalts). Dies ist im Hinblick auf eine optimale, d.h. möglichst kurze Beheizungszeiten erfordernde Erhitzung und/oder Sterilisierung von Folienverpackungen, bei der insbesondere im Falle von Tiemahrung ein bestimmter F₀-Wert einzuhalten ist, sehr ungünstig, da die zur Erreichung einer bestimmten Temperatur erforderliche Zeit bei ansonsten gleichen Umständen quadratisch mit der größten Tiefenabmessung bzw. Dicke des Produkts zunimmt. Aufgrund der erfindungsgemäßen Handhabungsstellung werden diese Probleme weitestgehend eliminiert.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Handhaben und thermischen Behandeln von rechteckigen Beutel- oder Folienverpackungen mit geringerer Dicke als Länge und Breite und mit zwei längeren und zwei kürzeren Seitenkanten, **gekennzeichnet durch** eine Orientierung der Folienverpakkungen (5), bei der eine die Seitenkanten enthaltene Haupterstreckungsebene der Folienverpackungen bei der Handhabung und/oder thermischen Behandlung einen Winkel von weniger als 60° mit der Vertikalen bildet und die längeren Kanten im wesentlichen horizontal ausgerichtet sind.

2. Verfahren nach Anspruch 1, **dadurch gekennzeichnet, daß** der Winkel weniger als 30° beträgt.

3. Verfahren nach Anspruch 1, **dadurch gekennzeichnet, daß** der Winkel 0° beträgt.

4. Verfahren nach Anspruch 1 oder 2, **dadurch gekennzeichnet, daß** die Folienverpackungen einander schuppenartig überlappend angeordnet sind.

5. Magazinartige Trägervorrichtung zum Handhaben einer Vielzahl von Folienverpackungen, zum Durchführen des Verfahrens nach einem der Ansprüche 1 bis 4, mit einer Anzahl von hintereinander angeordneten, im wesentlichen zueinander parallelen Trennwänden (3) zur Bildung von Aufnahmetaschen (4) für jeweils eine Folienverpackung (5), wobei zwischen zwei benachbarten Aufnahmetaschen (4) jeweils zwei Trennwände (3) mit gegenseitigem Abstand angeordnet sind, **dadurch gekennzeichnet, daß** die Breite der Trägervorrichtung (1) im wesentlichen der längsten Abmessung von aufzunehmenden Folienverpackungen entspricht, und daß die Höhe der Trägervorrichtung geringer ist als deren Breite.

6. Trägervorrichtung nach Anspruch 5, **dadurch gekennzeichnet, daß** der gegenseitige Abstand (a) von eine Aufnahmetasche (4) bildenden Trennwänden (3) im wesentlichen der Dicke der aufzunehmenden Folienverpackungen entspricht.

7. Trägervorrichtung nach Anspruch 5 oder 6, **dadurch gekennzeichnet, daß** die eine Aufnahmetasche bildenden Trennwände leicht V-förmig mit einem Öffnungswinkel von mehr als 0° angeordnet sind.

8. Trägervorrichtung nach einem der Ansprüche 5 bis 7, **dadurch gekennzeichnet, daß** die Trennwände flexibel an einem länglichen Grundkörper (2) gehalten sind, so daß eine Aufweitung der Aufnahmetaschen unter Vergrößerung des Öffnungswinkels möglich ist.

9. Trägervorrichtung nach einem der Ansprüche 5 bis 8, **dadurch gekennzeichnet, daß** die Aufnahmetaschen einen V-förmigen Boden aufweisen.

10. Trägervorrichtung nach einem der Ansprüche 5 bis 9, **dadurch gekennzeichnet, daß** die Trägervorrichtung stapelbar ausgebildet ist.

11. Trägervorrichtung nach Anspruch 10, **dadurch gekennzeichnet, daß** die Trägervorrichtung derart stapelbar ist, daß Aufnahmetaschen einer Trägervorrichtung teilweise in Zwischenräumen zwischen Aufnahmetaschen einer benachbart anzuordnenden Trägervorrichtung angeordnet sind.

## Claims

1. Method for handling and thermally treating rectangular bag or film packagings having a lesser thickness than length and breadth and having two longer and two shorter side edges, **characterised by** an orientation of the film packagings (5) in which a main extension plane of the film packagings containing the side edges forms an angle of less than 60° to the vertical during the handling and/or thermal treatment, and the longer edges are orientated substantially horizontally.

2. Method according to claim 1, **characterised in that** the angle is less than 30°.

3. Method according to claim 1, **characterised in that** the angle is 0°.

4. Method according to claim 1 or 2, **characterised in that** the film packagings are disposed overlapping each other in a scale-like manner.

5. Magazine-like carrier device for handling a multiplicity of film packagings, in order to implement the method according to one of the claims 1 to 4, having a number of separating walls (3) which are disposed one behind the other and substantially parallel to each other in order to form receiving pockets (4) for one film packaging (5) respectively, there being disposed between two adjacent receiving pockets (4) respectively two separating walls (3) with a mutual spacing, **characterised in that** the breadth of the carrier device (1) corresponds substantially to the longest dimension of the film packagings which are to be received, and **in that** the height of the carrier device is smaller than its breadth.

6. Carrier device according to claim 5, **characterised in that** the mutual spacing (a) of separating walls (3) which form a receiving pocket (4) corresponds substantially to the thickness of the film packagings which are to be received.

7. Carrier device according to claim 5 or 6, **characterised in that** the separating walls which form a receiving pocket are disposed slightly V-shaped with an opening angle of more than 0°.

8. Carrier device according to one of the claims 5 to 7, **characterised in that** the separating walls are flexibly retained on an oblong basic body (2), so that a widening of the receiving pockets by enlarging the opening angle is possible.

9. Carrier device according to one of the claims 5 to 8, **characterised in that** the receiving pockets have a V-shaped base.

10. Carrier device according to one of the claims 5 to 9, **characterised in that** the carrier device is configured stackably.

11. Carrier device according to claim 10, **characterised in that** the carrier device is stackable in such a manner that receiving pockets of one carrier device are disposed partially in the intermediate spaces between receiving pockets of a carrier device which is to be adjacently disposed.

## Revendications

1. Procédé de manipulation et de traitement thermique d'emballages en sachets ou en feuilles rectangulaires, de plus faible épaisseur que la valeur de la longueur et de la largeur, et avec deux bords latéraux plus longs et deux plus courts, **caractérisé par** une orientation des emballages en feuille (5), pour laquelle un plan d'étendue principale des emballages en feuille, contenant les bords latéraux lors de la manipulation et/ou du traitement thermique, forme un angle inférieur à 60° avec la verticale et les bords plus longs sont orientés de façon sensiblement horizontale.

2. Procédé selon la revendication 1, **caractérisé en ce que** l'angle est inférieur à 30°.

3. Procédé selon la revendication 1, **caractérisé en ce que** l'angle est de 0°.

4. Procédé selon la revendication 1 ou 2, **caractérisé en ce que** les emballages en feuille sont disposés en se chevauchant les uns les autres en écailles.

5. Dispositif support du genre chargeur pour la manipulation d'une pluralité d'emballages en feuille pour la mise en oeuvre du procédé selon l'une des revendications 1 à 4, avec une pluralité de parois de séparation (3) sensiblement parallèles entre elles, disposées les unes derrière les autres pour former des poches de logement (4), chacune pour un emballage en feuille (5), entre deux poches de logement (4) voisines étant disposées deux parois de séparation (3) à distance mutuelle, **caractérisé en ce que** la largeur du dispositif support (1) correspond sensiblement à la plus grande dimension des emballages en feuille à loger, et **en ce que** la hauteur du dispositif support est inférieure à sa largeur.

6. Dispositif support selon la revendication 5, **caractérisé en ce que** l'espacement (a) mutuel des parois de séparation (3) formant une poche de logement (4) correspond sensiblement à l'épaisseur des emballages en feuille à loger.

7. Dispositif support selon la revendication 5 ou 6, **caractérisé en ce que** les parois de séparation formant une poche de logement sont disposées légèrement en forme de V, avec un angle d'ouverture supérieur à 0°.

8. Dispositif support selon l'une des revendications 5 à 7, **caractérisé en ce que** les parois de séparation sont maintenues de façon flexible sur un corps de base (2) allongé, de manière à permettre un élargissement des poches de logement par une augmentation de l'angle d'ouverture.

9. Dispositif support selon l'une des revendications 5 à 8, **caractérisé en ce que** les poches de logement présentent un fond en forme de V.

10. Dispositif support selon l'une des revendications 5 à 9, **caractérisé en ce que** le dispositif support est empilable.

11. Dispositif support selon la revendication 10, **caractérisé en ce que** le dispositif support est empilé de manière que des poches de logement d'un dispositif support soient disposées partiellement dans des espaces intermédiaires, existant entre des poches de logement d'un dispositif support voisin.
